# EUROPEAN PATENT SPECIFICATION

(11) **EP 1 405 892 B1**
(45) Date of publication and mention of the grant of the patent: **16.11.2005**
(21) Application number: 01947966.6
(22) Date of filing: 10.07.2001
(51) Int. Cl.: C09K 11/06, C09D 11/02

(54) **RED FLUORESCENT MATERIAL AND COMPOSITION CONTAINING THE SAME**
ROTFLUORESZIERENDER STOFF UND IHN ENTHALTENDE ZUSAMMENSETZUNG
MATIERE ROUGE FLUORESCENTE ET COMPOSITION CONTENANT CETTE MATIERE

(43) Date of publication of application: 07.04.2004
(73) Proprietor: NIPPON KAYAKU KABUSHIKI KAISHA, Tokyo 102-8172 (JP)
(72) Inventor: IKEDA, Masaaki, c/o NIPPON KAYAKU KABUSHIKI KAISHA, Tokyo 115-0042 (JP); ONISHI, Masao, Joetsu-shi, Niigata 943-0832 (JP); KIYOYANAGI, Noriko, c/o NIPPON KAYAKU KABUSHIKI K., Tokyo 115-0042 (JP)
(74) Representative: Wablat, Wolfgang
(86) International application number: PCT/JP2001/005990
(87) International publication number: WO 2003/008516

(56) References cited:
- EP-A- 0 446 834
- EP-A- 0 913 448
- JP-A- 11 255 700
- JP-A- 63 150 358
- US-A- 3 539 941
- US-A- 5 006 503
- HAN GOU HUANG ET AL.: 'Europium, samarium-beta-diketone sakutai no keikou tokusei to sono keikou bunseki heno ouyou' NIPPON KAGAKUKAISHI no. 1, 1981, pages 66 - 73, XP002947567

## Description

### TECHNICAL FIELD

The present invention relates to a compound that is colorless under visible light but emits color and becomes visible under UV light irradiation, and a composition thereof. In more detail, the present invention relates to a red fluorescent material excellent in the emission intensity and a composition thereof.

### BACKGROUND ART

Compounds that are colorless under visible light but emit color in red under UV light irradiation such as a tris(thenoyl trifluoroacetonate)europium complex, tris(benzoyl trifluoroacetonate)europium complex and so on are known. These are intended to apply to various inks and so on. These compounds are relatively high in the emission intensity; however, red fluorescent materials higher in the quantum efficiency of the emission have been in demand.

The present invention intends to provide a red fluorescent material that emits in red under UV light irradiation, is excellent in the stability, and has an emission intensity of fluorescence improved more than the conventional one, and an ink composition containing the same.

### DISCLOSURE OF THE INVENTION

The present inventors, after making intensive studies to overcome the above problem, obtained a europium complex having a naphthyl trifluoroacetonate derivative and a triphenyl phosphine oxide derivative as ligands, and thereby came to obtaining a red emitting composition excellent in the fluorescence emission intensity.

That is, the present invention relates to
(1) a red fluorescent material represented by the following general formula (1), 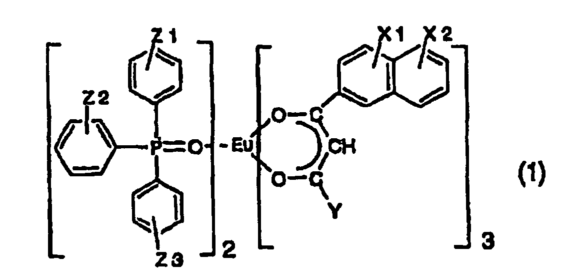 (In the formula, X1 and X2 each independently represents a hydrogen atom, halogen atom, alkyl group, alkoxyl group, hydroxyl group, amino group, alkylamino group, dialkylamino group, aryl group or aralkyl group. Y represents a fluorohydrocarbon group having from 1 to 10 carbon atoms. Z1, Z2 and Z3 each independently represents a hydrogen atom, halogen atom, alkyl group, alkoxyl group, hydroxyl group, amino group, alkylamino group, dialkylamino group, aryl group or aralkyl group.),
(2) a red fluorescent material set forth in (1), wherein X1 and X2 each is a hydrogen atom,
(3) a red fluorescent material set forth in (1) or (2), wherein Y is a trifluoromethyl group,
(4) a red fluorescent material set forth in (1), (2) or (3), wherein Z1, Z2 and Z3 are a hydrogen atom, and
(5) an ink composition containing a red fluorescent material set forth in any one of (1) through (4).

### BEST MODE FOR CARRYING OUT THE INVENTION

The present invention will be explained in detail.

A red fluorescent material according to the present invention is represented by the above general formula (1), and in the general formula (1) X1 and X2 or Z1, Z2 and Z3 each independently represents a hydrogen atom, halogen atom, alkyl group, alkoxyl group, hydroxyl group, amino group, alkylamino group, dialkylamino group, aryl group or aralkyl group. As the halogen atom, a chlorine atom, fluorine atom, bromine atom, and iodine atom can be cited. Furthermore, the alkyl group in said alkyl group, alkoxyl group, alkylamino group and dialkylamino group and so on represents a straight chain or branched, saturated or unsaturated hydrocarbon group, and may have a substituent such as a nitro group, cyano group or halogen atom. As the aryl group, a phenyl group, tolyl group, naphthyl group and so on can be cited. As the aralkyl group, a benzyl group, phenethyl group and so on can be cited.

Among these, a hydrogen atom, halogen atom, alkyl group, and alkoxyl group can be preferably cited, and as the alkyl group and alkoxyl group, ones having from 1 to 6 carbon atoms are preferable. Further preferably, a hydrogen atom, chlorine atom, methyl group and ethyl group can be cited.

Y represents a fluorohydrocarbon group having from 1 to 10 carbon atoms. As specific examples thereof, perfluoroalkyl groups such as a trifluoromethyl group, pentafluoroethyl group, heptafluoropropyl group, heptadecafluorooctyl group and so on, or monofluoromethyl group, difluoromethyl group, trifluoroethyl group, tetrafluoropropyl group, octafluoropentyl group and so on can be cited. Among these, the perfluoroalkyl group such as a trifluoromethyl group, pentafluoroethyl group, heptadecafluorooctyl group and so on can be preferably cited. A trifluoromethyl group can be cited more preferably.

Compounds represented by the general formula (1) can be synthesized as shown in the following synthesis example. That is, in alcohol or acetone for instance, triphenylphosphine oxides and, for instance, perfluoroalkyl-1-(2-naphtyl)-1, 3-butanedione and so on, in the presence of sodium hydroxide, are allowed to react with europium perchlorate or europium chloride preferably at a temperature from 0 to 80 degree centigrade, and thereby a compound represented by the general formula (1) can be synthesized.

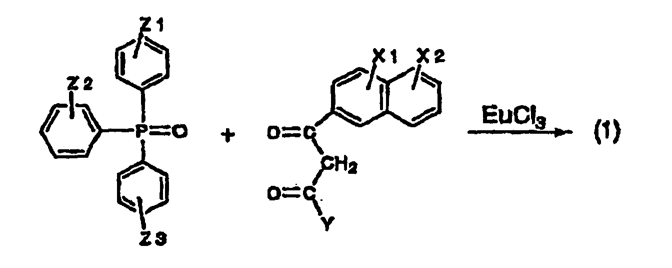

Examples of compound represented by the formula (1) are listed in Table 1. A site of substitution of a substituent in the table is shown with a positional relationship where X is shown with reference to 2-naphtyl and Z is shown with an ortho-site to P as a site 2, and Ph represents a phenyl group and Bz represents a benzyl group.

### EXAMPLES OF COMPOUND

**TABLE 1**

| Compound No. | X1 | X2 | Y | Z1 | Z2 | Z3 |
|---|---|---|---|---|---|---|
| 2 | H | H | CF3 | H | H | H |
| 4 | H | H | C8F17 | H | H | H |
| 5 | 6-CH3 | H | CF3 | H | H | H |
| 6 | 3-OCH3 | H | CF3 | H | H | H |
| 7 | H | H | CF3 | 4-CH3 | 4-CH3 | 4-CH3 |
| 8 | 3-CH3 | 7-CH3 | CF3 | 4-CH3 | 4-CH3 | 4-CH3 |
| 9 | 3-CH3 | 6-CH3 | C6F13 | H | H | H |
| 10 | H | H | CF3 | 4-OCH3 | 4-OCH3 | 4-OCH3 |
| 11 | H | H | CF3 | 4-Cl | 4-Cl | 4-Cl |
| 12 | 6-OH | H | C6F13 | 4-OH | 4-OH | 4-OH |
| 13 | H | H | CH2CF2CHF2 | H | H | H |
| 14 | 6-Bz | H | CF3 | H | H | H |
| 15 | 6-Ph | H | CF3 | H | H | H |
| 16 | 4-Br | H | CF3 | H | H | H |

A composition of a red fluorescent material according to the invention can be obtained by mixing at least one kind or more of the compounds represented by the general formula (1), various kinds of solvent, a resinous binder, and other additives, as needs arise, such as a dye, pigment, surfactant and so on, and can be used for various paints, inks and so on.

As the solvents that can be used in the invention, water; alcoholic solvents such as methanol, ethanol, isopropanol, ethylene glycol, diethylene glycol, propylene glycol, polyethylene glycol, glycerin and so on; ketonic solvents such as acetone, methyl ethyl ketone, cyclohexanone and so on; non-protonic polar solvents such as dimethyl formamide, dimethylsulfoxide, methylpyrrolidone and so on; ester solvents such as ethyl acetate, butyl acetate, and so on; aromatic solvents such as toluene, xylene and so on; halogen-containing solvents such as chloroform and so on; and cellosolve series solvents such as methyl cellosolve, butyl cellosolve and so on can be cited. These solvents can be used singly or in a mixed state.

As the resinous binders that can be used in the invention, acrylic resins such as polyacrylate, polymethacrylate, polymethyl methacrylate and so on; polyvinyl pyrrolidone; polyvinyl alcohol; polybutyl butyral; polyvinyl acetate; polycarbonate; epoxy resins; urethane resins; nylon resins; celluloses such as methyl cellulose, ethyl cellulose, acetyl cellulose, nitrocellulose and so on; and polyolefins can be cited. As varnishes for use in ink, for instance, varnish for use in polyamide base oily ink, varnish for use in cellulosic ink, varnish for use in acrylic ink and so on can be cited.

In the case of a red material according to the invention being contained in a resin, a resin such as polystyrene or the like and a red material according to the invention are mixed, heated, melted and dissolved, and formed into a resin plate by use of an injection molding machine; or for instance methacrylate monomer and a polymerization initiator are mixed with a red fluorescent material according to the invention, followed by irradiating UV light by use of a UV lamp to polymerize; or for instance, a polybutyl butyral resin dissolved in a solvent and a red fluorescent material according to the invention are mixed, followed by spin coating, and thereby a resinous film and so on can be obtained. In the case of the red material according to the invention being applied to various kinds of ink varnish, for instance, a red fluorescent material according to the invention is dissolved in a xylene or methyl ethyl ketone solution of methyl acrylate polymer to prepare a composition, and the composition can be coated on art paper or the like. In the case of the red fluorescent material according to the invention being applied to ink for use in ink jet printer and so on, for instance, a red fluorescent material according to the invention is dissolved in various kinds of solvent; and additives, as needs arise, such as a surface tension adjusting agent, viscosity adjusting agent, electric conductivity adjusting agent, binder resin, surfactant and so on are added thereto; and thereby an ink composition can be obtained.

In the invention, a concentration of the red fluorescent material in the composition is, though differing depending on fields of application, generally in the range of from 0.001 to 10% by weight in the composition, and preferably from 0.01 to 3% by weight.

### EMBODIMENTS

The present invention will be more specifically explained below with reference to embodiments. However, the invention is not restricted to these embodiments. In embodiments, "parts" means parts by weight as far as particular mention is not given.

### Example 1 (Synthesis of compound (2))

Fifty parts of ethanol, 2.4 parts of 4, 4, 4-trifluoroalkyl-1-(2-naphtyl)-1, 3-butandione, 1.7 parts of triphenylphosphine oxide, and 3.6 parts of 10% sodium hydroxide were mixed at room temperature, and to this solution an aqueous solution obtained by dissolving 1.1 parts of europium chloride hexahydrate in 30 parts of water was dropped followed by agitating for 2 hours. After the reaction came to completion, precipitated white solid was filtered, washed, dried, and thereby 4 parts of the compound (2) represented by the following formula was obtained.

Wavelength at maximum absorption in an absorption spectrum (methanol): 331 nm

Wavelength at maximum excitation in a fluorescence spectrum (methanol): 333 nm

Wavelength at maximum fluorescence in a fluorescence spectrum (methanol): 613 nm

Melting point: in the neighborhood of 80 degree centigrade

Decomposition point: in the neighborhood of 310 degree centigrade (determined by TG-DTA)

### Elemental analysis:

Carbon 60.81% (theoretical value: 62.28%)
Hydrogen 3.64% (theoretical value: 3.62%)

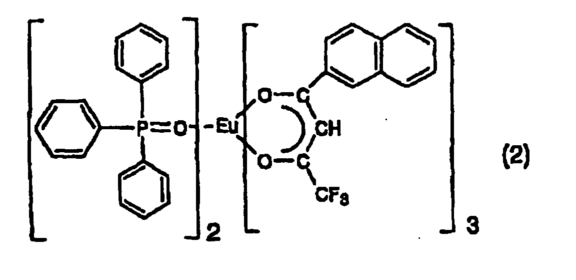

### Example 2 (preparation of ink)

One part of compound (2) was dissolved in 80 parts of methyl ethyl ketone, followed by adding and mixing to dissolve 10 parts of ethyl acetate, 6 parts of ethanol, 2 parts of N-methyl-2-pyrrolidone, one part of sodium thiocyanate and one part of vinyl chloride-vinyl acetate copolymer, further followed by filtering the solution, and thereby an ink composition according to the invention was obtained. The ink composition according to the invention did neither precipitate nor separate during the preservation, and, even after a long period of storage, did not exhibit a change in the physical properties. When this composition was used in an ink jet printer, to make a record, followed by irradiating UV light, it was confirmed that excellent color was emitted.

### Example 3 (preparation of ink)

Into 25 parts of ethanol, one part of the compound (2) was dissolved, followed by adding and agitating to dissolve 74 parts of NC varnish for use in gravure ink, and thereby a composition for use in gravure ink was obtained. The ink composition according to the invention did neither precipitate nor separate during the storage, nor did exhibit a change in the physical properties even after a long period of storage. The composition was coated on art paper by use of a bar coater and dried. It was confirmed that when UV light is irradiated thereon, excellent color was emitted.

### Example 4 (preparation of ink)

Into 25 parts of methyl ethyl ketone and 25 parts of toluene, one part of the compound (2) was dissolved, and to this solution 25 parts of dipentaerythritol hexaacrylate, 25 parts of phenyl glycidyl acrylate and 3 parts of 1-cyclohexyl phenyl ketone as a photo-polymerization initiator were added and agitated to dissolve, and thereby a UV curable ink composition was obtained. The ink composition according to the invention did neither precipitate nor separate during the storage, nor did exhibit a change in the physical properties even after a long period of storage. The composition was coated on art paper by use of a bar coater, followed by drying, and further followed by irradiating an energy of 100 mJ/cm² by use of a high pressure mercury vapor lamp, and thereby a cured film was obtained. It was confirmed that when UV light was irradiated, excellent color was emitted.

### Comparative example 1

The fluorescence intensity was compared between a compound (3) represented by the following formula that was obtained by use of 4, 4, 4-trifluoroalkyl-1-(2-thienyl)-1, 3-butanedione in place of 4, 4, 4-trifluoroalkyl-1-(2-naphtyl)-1, 3-butanedione in example 1 and the compound (1) according to the present invention (in methanol, concentration 10 µg/ml, excitation wavelength 333 nm, fluorescence detection wavelength 613 nm (Spectral fluorophotometer F-4010 manufactured by Hitachi Ltd.)). As obvious from Table 2 below, the red fluorescent material according to the invention was observed to have stronger fluorescence emission intensity.

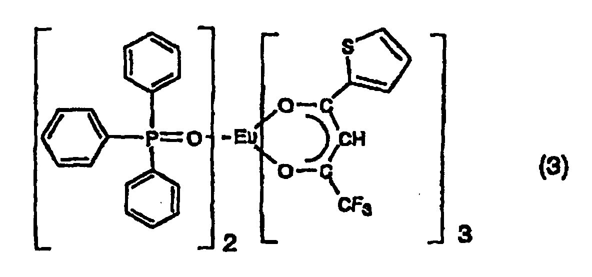

**TABLE 2**

| Sample | Fluorescence emission intensity |
|---|---|
| Compound (2) of Example 1 | 3000 |
| Compound (3) of Comparative example 1 | 1500 |

### EFFECT OF THE INVENTION

According to the present invention, a red fluorescent material that is improved in the emission intensity of the fluorescence in comparison with a conventional one and emits in red under UV light irradiation, and a composition containing the same were obtained. In addition, the compound is high in the solubility in an organic solvent and gives rise to a stable ink composition. The fluorescent material, being excellent in the emission intensity, can reduce its amount in the ink, and also in view of an improvement in the stability of the composition and reduction of cost, is high in the utility value.

## Claims

1. A red fluorescent material represented by the following general formula (1), 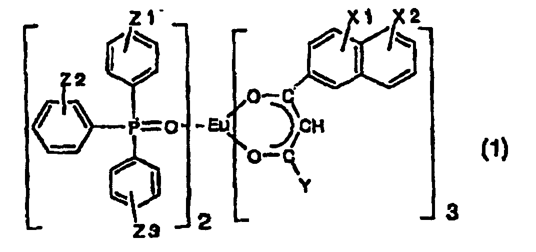 (wherein, X1 and X2 each independently represents a hydrogen atom, halogen atom, alkyl group, alkoxyl group, hydroxyl group, amino group, alkylamino group, dialkylamino group, aryl group or aralkyl group; Y represents a fluorohydrocarbon group having from 1 to 10 carbon atoms; and Z1, Z2 and Z3 each independently represents a hydrogen atom, halogen atom, alkyl group, alkoxyl group, hydroxyl group, amino group, alkylamino group, dialkylamino group, aryl group or aralkyl group.)

2. A red fluorescent material according to claim 1, wherein X1 and X2 each is a hydrogen atom.

3. A red fluorescent material according to claim 1, wherein Y is a trifluoromethyl group.

4. A red fluorescent material according to claim 1, wherein Z1, Z2 and Z3 each is a hydrogen atom.

5. An ink composition including a red fluorescent material according to any one of claims 1 to 4.

## Patentansprüche

1. Rot fluoreszierender Stoff [material], dargestellt durch die folgende allgemeine Formel (1), 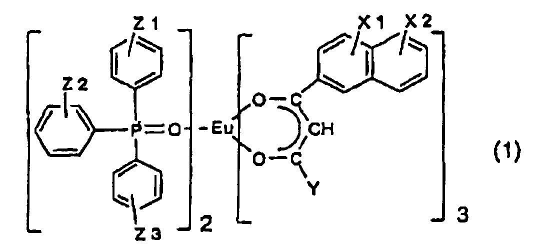 (wobei X1 und X2 jeweils unabhängig ein Wasserstoffatom, Halogenatom, eine Alkylgruppe, Alkoxygruppe, Hydroxylgruppe, Aminogruppe, Alkylaminogruppe, Dialkylaminogruppe, Arylgruppe oder Aralkylgruppe (aralkylgruppe) bedeuten; Y eine Fluorkohlenwasserstoffgruppe bedeutet, welche von 1 bis 10 Kohlenstoffatome aufweist; und Z1, Z2 und Z3 jeweils unabhängig ein Wasserstoffatom, Halogenatom, eine Alkylgruppe, Alkoxygruppe, Hydroxylgruppe, Aminogruppe, Alkylaminogruppe, Dialkylaminogruppe, Arylgruppe oder Aralkylgruppe bedeuten.)

2. Rot fluoreszierender Stoff nach Anspruch 1, wobei X1 und X2 jeweils ein Wasserstoffatom ist.

3. Rot fluoreszierender Stoff nach Anspruch 1, wobei Y eine Trifluormethylgruppe ist.

4. Rot fluoreszierender Stoff nach Anspruch 1, wobei Z1, Z2 und Z3 jeweils ein Wasserstoffatom ist.

5. Tintenzusammensetzung, welche einen rot fluoreszierenden Stoff nach einem der Ansprüche 1 bis 4 umfasst.

## Revendications

1. Substance fluorescente rouge représentée par la formule générale (1) suivante 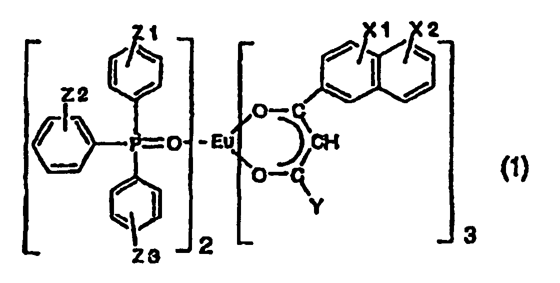 (où X1 et X2 représentent chacun indépendamment un atome d'hydrogène, un atome d'halogène, un groupe alkyle, un groupe alcoxy, un groupe hydroxyle, un groupe amino, un groupe alkylamino, un groupe dialkylamino, un groupe aryle ou un groupe aralkyle ; Y représente un groupe fluorohydrocarboné ayant de 1 à 10 atomes de carbone ; et 21, Z2 et Z3 représentent chacun indépendamment un atome d'hydrogène, un atome d'halogène, un groupe alkyle, un groupe alcoxy, un groupe hydroxyle, un groupe amino, un groupe alkylamino, un groupe dialkylamino, un groupe aryle ou un groupe aralkyle).

2. Substance fluorescente rouge selon la revendication 1 où X1 et X2 sont chacun un atome d'hydrogène.

3. Substance fluorescente rouge selon la revendication 1 où Y est un groupe trifluorométhyle.

4. Substance fluorescente rouge selon la revendication 1 où Z1, Z2 et Z3 sont chacun un atome d'hydrogène.

5. Composition d'encre incluant une substance fluorescente rouge selon l'une quelconque des revendications 1 à 4.
